# EUROPÄISCHE PATENTSCHRIFT

(11) **EP 1 463 775 B1**
(45) Veröffentlichungstag und Bekanntmachung des Hinweises auf die Patenterteilung: **26.12.2012**
(21) Anmeldenummer: 02796747.0
(22) Anmeldetag: 30.12.2002
(51) Int. Cl.: C08L 83/04, G02B 6/44, H01B 7/285, H01B 3/46, H01B 7/28, H01B 13/32

(54) **ADERFÜLLMASSE**
CORE FILLING MATERIAL
MATERIAU DE REMPLISSAGE POUR CONDUCTEURS

(30) Priorität: 04.01.2002 DE 10200111
(43) Veröffentlichungstag der Anmeldung: 06.10.2004
(73) Patentinhaber: Evonik Hanse GmbH, 21502 Geesthacht (DE)
(72) Erfinder: MENCKE, Markus, 21365 Adendorf (DE); POPPE, Wilfried, 21354 Bleckede (DE); BLOCK, Hermann, 21379 Echem (DE)
(74) Vertreter: Huenges, Martin
(86) Internationale Anmeldenummer: PCT/EP2002/014808
(87) Internationale Veröffentlichungsnummer: WO 2003/055948

(56) Entgegenhaltungen:
- EP-A- 0 032 268
- EP-A- 0 288 869
- WO-A-90/10035
- DE-A- 2 730 555
- DE-A- 3 304 715
- DE-A- 4 110 654
- US-A- 3 020 260

## Beschreibung

Die Erfindung betrifft Aderfullmassen für optische Kabel, sowie mit solchen Aderfüllmassn versehene Kabel und die Verwendung solcher Aderfülloptische massen für optische Kabel zum Einsatz unter Bedingungen erhöhter Temperatur und insbesondere bei vertikaler Anordnung.

Weiterhin betrifft die Erfindung Verfahren zur Herstellung solcher Adern für optische Kabel.

Aderfüllmassen sind seit langem im Stand der Technik eingesetzt worden, um Leiter, die sich normalerweise im Inneren von Hohladern befinden, gegen mechanische und Feuchtigkeitseinflüsse zu schützen und die Übertragungsgüte über lange Zeiträume zu gewährleisten.

EP 0 032 268 beschreibt ein Verfahren zur Herstellung eines longitudinalen wasserdichten Kabels mit einer Dichtungsmasse, die einen vulkanisierbaren Silikongummi, ein Verdünnungsmittel, sowie einen Füllstoff umfasst.

DE 41 10 654 beschreibt Füllmaterialien für optische Kabel zum Schutz gegen mechanische Beanspruchung und zur Zulassung von Gleitbewegungen, die eine oder mehrere UV-reaktive Komponenten aufweisen können.

DE 33 04 715 offenbart ein Verfahren zur Herstellung von längswasserdichten Kabeln und Leiterseilen unter Verwendung einer Dichtungsmasse auf Basis von Silikonkautschuk.

US 3 020 260 umfasst Organosiloxangele für die Verwendung als Füllmaterial für elektrische Anordnungen.

Die moderne Fertigung solcher Kabel stellt hohe Anforderungen an die verwandten Materialien, insbesondere wo extrem hohe Liniengeschwindigkeiten und/oder sehr kleine Aderdurchmesser (wie z.B. beim Typ semi-tight buffered) verlangt werden. Herkömmliche Gele sind strukturviskos und zeigen bei der Applikation elastisches Verhalten, das besonders unter dem Einfluss von Temperaturschwankungen negativen Einfluss auf die Konstanz der Faserüberlänge hat. Es kommt zu unkontrollierter Fasermitnahme und damit zu instabilen Faserüberlängen.

Herkömmliche Aderfüllmassen, wie sie beispielsweise in dem auf die Anmelderin H.B. Fuller zurückgehenden europäischen Patent 0 371 374 beschrieben sind, bestehen aus über relativ große Temperaturbereiche fließfähigen Medien wie beispielsweise Kohlenwasserstoffölen, im Gemisch mit Gelbildnern, wie beispielsweise feinst verteiltem Siliziumdioxid (Aerosil) oder organischen Verdickungsmitteln. Solche physikalisch stabilisierten Systeme eigenen sich für übliche Anwendungen, bei denen das Kabel keinen sehr großen thermischen und mechanischen Belastungen ausgesetzt ist. Für hohe Temperaturen und mechanisch anspruchsvolle Verwendungen eignen sich solche herkömmlichen Kabelfüllmassen weniger.

Solche anspruchsvollen Anwendungen sind beispielsweise im Bergbau oder in der chemischen Verfahrenstechnik gegeben. Zum einen müssen große vertikale Strecken überbrückt, zum anderen die Einflüsse extremer Bedingungen von Druck, Temperatur und mechanischen Wechselbelastungen (Erschütterungen) wirkungsvoll gedämpft werden. Die dafür geeigneten Gele werden vorzugsweise in übliche Kunststoffadern wie PBT, PA, PP, COC usw. sowie in Edelstahladern eingebracht.

Gegenwärtig werden Sensoren und Aktuatoren unter rauhen industriellen Einsatzbedingungen mittels elektrischer Kabel angeschlossen. Diese elektrischen Kabel sind mit entsprechenden Armierungen versehen, damit sie den hohen Temperaturen (150° C bis oberhalb 200° C) und hohen mechanischen Lasten widerstehen können, wie sie bei Anwendungen z.B. im Bergbau auftreten.

Herkömmliche optische Kabel lassen sich für solche Zwecke nicht einsetzen, einerseits weil die bekannten Aderfüllmasse nicht entsprechend thermisch stabil sind, und andererseits weil die zwingenderweise im wesentlichen vertikale, also etwa in Richtung des Erdradius verlaufende Anordnung langer Kabel, z.B. im Bergbau (bis zu mehreren Kilometer Länge), zum Reißen der Leiterfasern, sowie zu Undichtigkeiten usw. im Kabel führt. Für vertikale Einsätze eignen sich besonders Stahladern, wie sie aus der OPGW-Technik bekannt sind. Stahladem haben zudem den Vorteil, dass sie Lichtleiter und Füllmasse gegen äußere chemische Einflüsse schützen.

Andererseits wäre es wünschenswert, angesichts der größeren Leistungsfähigkeit und der Unempfindlichkeit gegen elektromagnetische Felder optische Kabel auch für solche Einsatzzwecke einsetzen zu können.

Eine Aufgabe der Erfindung ist es, eine Aderfüllmasse sowie entsprechend gefüllte Kabel zur Verfügung zu stellen, die thermisch belastbarer, insbesondere höher erwärmbar sind, als herkömmliche optische Kabel, ohne dabei beschädigt zu werden.

Eine weitere Aufgabe der Erfindung liegt in der Bereitstellung einer Adernfüllmasse, die wegen ihrer chemischen Struktur Klebkraft aufweist, und in der Lage ist, Leiter in den Adern so zu fixieren, dass ein vertikales Abgleiten und eine damit verbundene Zugbelastung der Leiter verhindert wird.

Eine weitere Aufgabe der Erfindung liegt in der Bereitstellung von optischen Kabeln, die bei großen Längen vertikal angeordnet werden können. Zu den Aufgaben der Erfindung gehört auch die Angabe von Aderfüllmasse und Kabeln, sowie von entsprechenden Herstellungsverfahren für hohe Fertigungsgeschwindigkeiten.

Zur Lösung dieser Aufgaben wird die Verwendung wenigstens eines durch Vernetzung in situ gebildeten Polymers als Aderfüllmasse für optische Kabel gemäß den Ansprüchen 1 bis 27, 35 und 36 bereitgestellt. Des Weiteren wird ein Verfahren zur Herstellung eines mit einer Abfüllmasse ausgestatteten optischen Kabels gemäß den Ansprüchen 28 bis 34 bereitgestellt.

Unter einem durch Vernetzung gebildeten Polymer ist im Rahmen der Erfindung insbesondere ein chemisch vernetztes Polymer zu verstehen. Insbesondere handelt es sich hierbei um elastische Gele, die unter mechanischer Beanspruchung nicht kriechen oder fließen (weder im Sinne einer Newton'schen Flüssigkeit noch im Sinne einer nicht-Newton'schen Flüssigkeit), sondern sich vielmehr wie ein elastischer Körper verformen.

Besonders bei vertikaler Anordnung der Adern bewirkt dies eine feste Haftung der Leiter an der Hülle, so dass der Leiter von der Aderfüllmasse und damit von der Aderhülle getragen wird. Der Leiter wird dadurch zugentlastet, was Leiterrisse usw. verhindert.

Gleichzeitig lässt sich das chemisch vernetzte Polymergel in seinen mechanischen Eigenschaften so einstellen, dass es eine sanfte, nachgiebige Einbettung mechanisch empfindlicher Leiter, wie insbesondere optischer Fasern, ermöglicht, ähnlich wie dies bei den bekannten Kabelfüllmassen auf der Basis thixotropierter Gele der Fall war.

Das chemisch vernetzte Polymergel lässt sich, durch geeignete Wahl der Ausgangskomponenten, thermisch sehr viel höher belasten als herkömmliche Aderfüllmassen, ohne dabei Schaden zu nehmen. Betriebstemperaturen oberhalb 200° C, gegebenenfalls bis oberhalb 230° C sind erreichbar.

Die vernetzten Polymere der Erfindung sind im wesentlichen frei von niedermolekularen fließfähigen und flüchtigen Anteilen, und neigen daher nicht zum "Ausbluten" oder zum Aufbau nennenswerter Dampfdrücke bei erhöhter Temperatur.

Dabei sind die vernetzten Gele der Erfindung hochgradig kompatibel mit üblichen Materialien für Hohladern, Fasercoatings und Farben sowie anderen Materialen, die beim Aufbau von Kabelsystemen verwendet werden.

Während im Stand der Technik die Aderfüllmasse vor der Einfüllung in das Kabel vorgebildet wurde, wird die erfindungsgemäße Aderfüllmasse in situ erzeugt.

Die im Stand der Technik übliche Anwendung von mehr oder weniger elastischen Gelen, die üblicherweise thixotropiert oder anderweitig verdickt sind, und sich daher nicht mehr als Newton'sche Flüssigkeiten benehmen, ist nicht unproblematisch. Das Einführen eines verdickten Gels in die Hohlader, und damit um die schon vorhandenen Leiter herum, führt zu erheblichen mechanischen Belastungen der Leiter. Aktuelle Fertigungsgeschwindigkeiten liegen bei bis zu 400 m/Min. Das Fließverhalten bekannter Aderfüllmassen behindert die Einbringung bei solchen Geschwindigkeit. Daher eignet sich diese Technik nicht für Hochgeschwindigkeitsverfahren zur Aderherstellung.

Dem gegenüber wird erfindungsgemäß das Polymer, das die Kabelfüllmasse im wesentlichen oder vollständig bildet, in situ hergestellt. Hierzu wird ein noch reaktionsfähiges, d.i. noch nicht (oder nicht völlig) vernetztes Ausgangsmaterial verwendet, das vorzugsweise aus zwei Ausgangskomponenten besteht, die erst für die Herstellung des Kabels miteinander gemischt werden und dann ein Reaktionssystem bilden.

Eine weitere wesentliche Voraussetzung für die Ausgangskomponente bzw. das Reaktionsgemisch ist ausreichende Fließfähigkeit zur Einbringung in das Kabel ohne Beschädigung der Leiter. Verwendet man, wie dies erfindungsgemäß bevorzugt wird, eine Reaktionsmischung, die als Newton'sche Flüssigkeit geringer Viskosität vorliegt, lässt sich das Reaktionsgemisch problemlos auch im Zusammenhang mit Hochgeschwindigkeits-Herstellungsverfahren einsetzen.

Nachdem das Reaktionsgemisch an seinem gewünschten Ort ist, d.i. dort, wo später die Aderfüllmasse im Kabel die Leiter einbetten soll (das wird erfindungsgemäß mit dem Begriff "in situ" bezeichnet), erfolgt die Reaktion, durch die das vernetzte Polymer gebildet wird.

Auf diese Weise wird unmittelbar durch die Vernetzungsreaktion die Aderfüllmasse in Form eines elastischen Gels dort erzeugt, wo sie sich bestimmungsgemäß befinden soll.

Vorzugsweise erfolgt die Reaktion im Inneren der Hohladern, wobei das Reaktionsgemisch bei der Reaktion die zu schützenden Leiter im gewünschten Maße umgibt.

Als Ausgangskomponenten kommen hauptsächlich Monomere oder, besonders bevorzugt, Präpolymere in Frage, die einer Vernetzungsreaktion zur Bildung der gewünschten Aderfüllmasse zugänglich sind.

Erfindungsgemäß besonders bevorzugt sind hierfür Ausgangskomponenten aus der Gruppe der Polyurethane, Polyharnstoffe und Polysiloxane.

Die Verwendung von Polysiloxanen führt zu besonders ausgeprägt thermisch stabilen Aderfüllmassen. Hier lassen sich Betriebstemperaturen oberhalb von 200° C und gegebenenfalls sogar oberhalb 230° C realisieren, weswegen sich gerade solche Aderfüllmassen für den Einsatz unter entsprechenden, thermisch anspruchsvollen Bedingungen eignen.

Die Präpolymere wird man so wählen, dass ihr Molekulargewicht bei den gegebenen Verarbeitungstemperaturen bei der Aderherstellung die gewünschte Fließfähigkeit ergibt, und andererseits zu einem vernetzten Polymer mit den erforderlichen mechanischen, insbesondere elastischen Eigenschaften führt.

Typische mittlere Molekulargewichte solcher Präpolymere liegen bei weniger als 100.000 Dalton, vorzugsweise weniger als 50.000 Dalton und insbesondere bevorzugt bei weniger als 25.000 Dalton.

In der gegenwärtig am meisten bevorzugten Ausführungsform werden Präpolymere auf Divinylpolydialkylsiloxanbasis bevorzugt, deren mittleren Molekulargewichte zwischen 15.000 Dalton und 20.000 Dalton liegen. Solche Präpolymere haben Viskositäten im Bereich von weniger als 500 mPas bei 25°C ; die Viskosität kann natürlich noch geringer oder auch größer gewählt werden, solange die Verarbeitbarkeit des Materials gegeben bleibt.

Ein besonders bevorzugtes Präpolymer im Reaktionsgemisch ist Divinylpolydimethylsiloxan mit einer Viskosität von etwa 500 mPas und einem mittleren Molekulargewicht von etwa 19.000 Dalton. Als Vernetzungsmittel für dieses Präpolymer eignet sich hierfür besonders ein Si-H-Gruppen aufweisendes Polymethylsiloxan, das besonders bevorzugt eine Viskosität von etwa 50 mPas und einen Wasserstoffgehalt von ungefähr 0,4 Gewichts-% aufweist. Das Vernetzungsmittel muss nur in sehr kleinen Gehalten (typischerweise weniger als 5 Gewichtsteile, bezogen auf das gesamte Reaktionsgemisch) vorgesehen werden.

Ein weiteres, typisches gelbildendes System umfasst ein Dihydrogen-polydialkylsiloxan mit einer Viskosität von 400 mPas bei 25°C und ein Molgewicht von ca. 17.000. Der Vernetzer dieses Systems ist ein vinylsubstituiertes Polydimethylsiloxan mit Molmassen von 3000 bis 30.000 Dalton.

Die Alkylgruppen können bei solchen Siloxanen teilweise durch Aryl-, insbesondere Phenylgruppen ersetzt werden, was die Temperaturstabilität der Füllmasse erhöht.

Der Vinylgehalt der Reaktionsmischungen beträgt in beiden Fällen 0,01 mmol/g bis 1 mmol/g, vorzugsweise im Bereich von 0,1 mmol/g. Vorzugsweise wird der jeweils korrespondierende Wasserstoffgehalt über die Konzentration des Wasserstoffsiloxans stöchiometrisch, oder aber bevorzugt unterstöchiometrisch eingestellt. Typische Reaktionsgemische enthalten etwa 67 Mol-% an reaktivem Wasserstoff, bezogen auf die Vinylkomponente.

Eine bevorzugte Methode, die mechanischen Endeigenschaften des Gels anwendungsentsprechend einzustellen, besteht darin, monofunktionelle Vinyl- oder Wasserstoffsiloxane chemisch in das Netzwerk zu integrieren. Diese Präpolymere weisen im wesentlichen die gleichen Molgewichte und Viskositäten auf wie die difunktionellen, netzwerkbildenden Präpolymere. Sie gestatten, die Vernetzungsdichte gezielt herabzusetzen und die Festigkeit des Gels in sehr weiten Grenzen einzustellen.

Die Bildung des Polymers aus dem Reaktionsgemisch kann durch geeignete Mittel ausgelöst bzw. beschleunigt werden; erfindungsgemäß sind katalysierte Umsetzungen.

So wird man für die gegenwärtig am meisten bevorzugte Ausführungsform einen sehr kleinen Gehalt an einem Katalysator auf Platinbasis einsetzen, der die Vernetzung des Divinylpolydimethylsiloxans wirksam herbeiführt. Neben Verbindungen des Iridiums, Rhodiums und Palladiums eignen sich als Katalysatoren besonders Platinsalze wie z. B. Hexachloroplatin(IV)-säure, cis-Platin(IV)diammin-chlorid oder aber, besonders bevorzugt, daraus durch Verkochung hergestellte Platin-Vinylsiloxankomplexe.

Um andererseits eine störungsfreie Verarbeitung mit ausreichenden Topfzeiten sicherzustellen, wird dem Reaktionsgemisch in einigen bevorzugten Ausführungsformen ein Verzögerungsmittel zugesetzt, mittels dessen sich die Geschwindigkeit der Reaktion einstellen lässt.

Als Verzögerungsmittel eignen sich besonders Ethinderivate wie Butinol sowie u. a. auch Divinylsiloxan (DVS).

In einem solchen Reaktionssystem lässt sich innerhalb relativ kurzer Umsetzungszeiten (von 0,1 sec. bis einige 10 Stunden bei RT) die gewünschte Aderfüllmasse ausbilden. Hinsichtlich der Konuspenetrationswerte und Dichte entsprechen solche Kabelfüllmassen den im Stand der Technik üblichen Produkten.

Eine vorteilhafte weitere Ausgestaltung der Erfindung besteht darin, die beschriebenen Gele mit monodispersen, nanoskaligen Füllstoffen zu versetzen, um den thermischen Ausdehnungskoeffizienten wirksam zu erniedrigen, wie es bei m Betrieb der Adern unter hoher Temperatur- bzw. Temperaturwechselbelastung wünschenswert ist. Im Gegensatz zu herkömmlichen Füllstoffen bilden nichtagglomerierende Nanoteilchen nur sehr geringe viskositätserhöhenden Strukturen aus. Zudem erzeugen sie keine anisotrope mechanische Belastung der Lichtleiter und bewirken somit auch keine zusätzliche Signaldämpfung. Der Füllgrad an SiO2-Partikeln (10-50 nm) erreicht derzeit 40 Gew.-%, höhere Füllgrade sind möglich.

Die Herstellung von Adern mit den erfindungsgemäßen Aderfüllmassen lässt sich beispielsweise dadurch realisieren, dass zunächst zwei Ausgangskomponenten vorgelegt werden, die die notwendige Fließfähigkeit haben, und von denen eines das Vernetzungsmittel und das andere den für die Auslösung der Vernetzungsreaktion notwendigen Katalysator enthält.

Ein vorzugsweise vorhandener Gehalt an Verzögerungsmittel kann in einer der beiden Ausgangskomponenten vorgesehen werden.

Jetzt werden die Ausgangskomponenten mittels Dosierpumpen zu einem Mischer geführt, und dort zu einem möglichst homogenen Reaktionsgemisch vermischt.

Das Reaktionsgemisch hat zunächst eine niedrige Viskosität, die sich von der der Ausgangskomponenten nicht wesentlich unterscheidet. Das Reaktionsgemisch kann daher wie eine newtonsche Flüssigkeit zusammen mit den Lichtwellenleitern in die Hohlader eingeführt werden, in das gleichzeitig die Leiter mit eingeführt werden.

Nunmehr wird die Reaktion durchgeführt, wodurch sich die Aderfüllmasse in situ im Kabel um die Leiter herumbildet. Im Falle von polymeren Aderwerkstoffen führt die Extrusionstemperatur zur alsbaldigen Ausformung des Gels. Im Falle von Stahladern müssen die Ausgangskomponenten auf eine höhere Reaktionsgeschwindigkeit bei Raumtemperatur eingestellt werden, oder aber der Stahlmantel ist zu temperieren, um den Gelbildungsprozess einzuleiten.

Am Endpunkt der Umsetzung ist die Herstellung der Aderfüllmasse abgeschlossen.

Es versteht sich, dass statt der hier beschriebenen Arbeitsweise mit zwei Ausgangskomponenten auch mit einer oder auch mit mehr als zwei Ausgangskomponenten gearbeitet werden kann.

Statt der hier beschriebenen Verfahrensweise, bei der das Reaktionsgemisch vor dem Zusammenführen mit den Aderbestandteilen angemischt wird, ist es natürlich auch denkbar, die Vermischung gleichzeitig mit dem Einführen in den Kabelmantel oder sogar zeitweilig erst danach eintreten zu lassen. Es wäre also durchaus denkbar, die flüssigen Ausgangskomponenten separat in die Hohlader einzuführen und sich dabei, oder sogar erst dort durchmischen zu lassen. Gegenwärtig wird jedoch die Vormischung der Ausgangskomponenten bevorzugt, weil sich hier einfacher die gewünschte Homogenität des Reaktionsgemisches gewährleisten lässt.

Die Reaktion des Reaktionsgemisches in situ kann durch geeignete Maßnahmen, wie beispielsweise Erwärmung, Bestrahlung und dergleichen der Ader beeinflusst werden.

Neben den hier vorzugsweise verwendeten Polysiloxanen eignen sich als Ausgangsmaterialien auch andere Monomere bzw., insbesondere Präpolymere so etwa Polyurethane und Polyharnstoffe. Grundsätzlich eignet sich jedes Material, das durch Reaktion in situ ein elastisches Gel mit den gewünschten mechanischen und thermischen Eigenschaften bilden kann und mit den anderen Ader- und Lichtwellenleiterwerkstoffen kompatibel ist.

Im folgenden wird die Erfindung an einem Ausführungsbeispiel weiter erläutert:

Als erste Ausgangskomponente wurde ein flüssiges Gemisch von 99 Gew.-Teilen Divinylpolydimethylsiloxan, Viskosität 500 mPas und Molekulargewicht etwa 19.000 Dalton, mit einem Gewichtsteil Platin-basierenden Katalysator hergestellt.

Das Molekulargewicht wurde mittels Gelpermeationschromatographie ermittelt. Der Wert entspricht den Literaturwerten für lineare Dimethylpolysilxane (Walter Noll, Chemie und Technologie der Silikone, Verlag Chemie, 1968).

Die Viskosität wurde mit einem Rotationsviskosimeter bestimmt (Brookfield DV-II Viscometer, Spindel 42). Der Katalysator war ein 0,5% Pt enthaltender Siloxankomplex (Kat 510, erhältlich von hanse chemie GmbH, Geesthacht).

Separat hiervon wurde eine zweite Ausgangskomponente hergestellt, aus 30 Gew.-Teilen Divinylpolydimethylsiloxan wie in der ersten Ausgangskomponente, 69 Gew.-Teilen eines vinyl-monofunktionellen Präpolymers Polydimethylsiloxans mit einer Viskosität von 450 mPas sowie 1 Gew.-Teilen eines Si-H-Gruppen-haltigen Polydimethylsiloxans mit einer Viskosität von 50 mPas und einem Gehalt von Wasserstoff (in Form von Si-H-Gruppen) von 0,4 Gew.-%); außerdem enthielt diese zweite Ausgangskomponente noch 0,25 Gew.-% 1-Butinol(4) als Reaktionsverzögerer.

Beide Ausgangskomponenten wurde jetzt über Dosierpumpen, bei etwa gleicher Fördermenge, einem statischen Mischer zugeführt und dort homogen vermischt.

Das so erzeugte Reaktionsgemisch war flüssig und unterschied sich in seinem rheologischen Verhalten nicht wesentlich von den Ausgangskomponenten.

Das Reaktionsgemisch wurde nun auf einer typischen Thermoplast-Aderlinie zusammen mit einigen Lichtwellenleitern anstelle des herkömmlichen Gels in eine PBT-Hohlader eingebracht und bestätigte die Wirksamkeit des erläuterten Konzeptes. Nach 70 Minuten bei Umgebungstemperatur war das Reaktionsgemisch zu einem Gel vernetzt, dessen Konuspenetration (SETA-Penetrometer bei 21° C und 105 g) bei etwa 250 lag. Das Gel hatte eine Dichte von etwa 0,98.

Das gebildete Gel konnte in allen Punkten die Anforderungen an herkömmliche Gele erfüllen. Darüber hinaus ergaben sich im Vergleich zu herkömmlichen Gelen geringere Dämpfungswerte für die optischen Signale.

Das so erzeugte Gel war bei 200° C auch über längere Zeiträume (8 Monate) stabil und änderte sich nicht messbar in seinen mechanischen Eigenschaften. Ausbluten oder der Aufbau nennenswerter Dampfdrucke wurde nicht festgestellt.

Durch Zugbelastung der Lichtleiter ließ sich feststellen, dass diese durch die Kabelfüllmasse elastisch an der Innenwand des Kabelmantels gehalten wurden.

Hierzu wurden von der fertigen Ader Längen zu je sechs Zentimeter geschnitten, der Mantel auf 1 cm Länge entfernt, das Gel mittels Tuch und Lösemittel vorsichtig von den freigelegten Lichtleitern abgerieben. Die freien Fasern wurden an den Spitzen mit einem Tropfen 2-Komponentenkleber versehen.

Nach dessen Aushärten wurden die Fasern einzeln in eine Universalprüfmaschine (Zwick 1405) eingespannt und kontrolliert aus dem gelgefüllten Mantel gezogen. Die Kraft-Dehnungskurven belegten die Wirksamkeit des Konzeptes. Mit dieser Methode lässt sich auch die Einstellung des Gels sowie das Alterungsverhalten überprüfen.

Eine so erzeugte Stahlader bzw. ein daraus aufgebautes Kabel lässt sich unter Bedingungen erhöhten Drucks und auch bei vertikaler Anordnung langer Kabelstrecken, etwa in Bergwerken als Ersatz herkömmlicher elektrischer Kabel einsetzen.

## Patentansprüche

1. Verwendung wenigstens eines durch Vernetzung *in situ* gebildeten Polymers als Aderfüllmasse für optische Kabel, wobei das Polymer durch eine katalysierte Reaktion eines ausreichend fließfähigen Gemisches wenigstens zweier Ausgangskomponenten im Zuge der Herstellung der Adern gebildet wird, wobei die Ausgangskomponenten reaktive Monomere oder Präpolymere umfassen, wenigstens eine Ausgangskomponente Divinylpoly(di-)alkylsiloxan ist, wobei die Alkylgruppen teilweise durch Arylgruppen ersetzt sein können, und alle Ausgangskomponenten Newton'sches Fließverhalten und eine Viskosität von weniger als 1.000 mPas, bestimmt mit einem Brookfield DV-II Viscometer, Spindel 42 bei 25°C, aufweisen, und wobei der bei der katalysierten Reaktion verwendete Katalysator ein Katalysator auf Basis von Platin oder eine Verbindung des Iridiums, Rhodiums oder Palladiums ist.

2. Verwendung nach Anspruch 1,
wobei die Alkylgruppen teilweise durch Phenylgruppen ersetzt sein können.

3. Verwendung nach Anspruch 1 oder 2, wobei das Polymer im Inneren einer Hohlader aus Stahl oder thermoplastischen Polymeren so gebildet wird, dass es die Leiter einbettet.

4. Verwendung nach Anspruch 3, wobei die Leiter Lichtleitfasern sind.

5. Verwendung nach einem der Ansprüche 1 bis 4, wobei die Masse ein Gel ist.

6. Verwendung nach Anspruch 5, wobei das Gel elastisch ist.

7. Verwendung nach einem der Ansprüche 1 bis 6, wobei das vernetzte Polymer bis wenigstens 200° C thermisch stabil ist.

8. Verwendung nach Anspruch 7, wobei das vernetzte Polymer bis wenigstens 230°C thermisch stabil ist.

9. Verwendung nach einem der Ansprüche 1 bis 8, wobei die Ausgangskomponenten Präpolymere umfassen.

10. Verwendung nach einem der Ansprüche 1 bis 9, wobei wenigstens eine Ausgangskomponente ein monofunktionelles Monomer oder Präpolymer umfasst, um die Vernetzungsdichte des Gels herabzusetzen.

11. Verwendung nach einem der Ansprüche 9 oder 10, wobei die Ausgangskomponenten wenigstens ein Präpolymer mit einem mittleren Molekulargewicht von weniger als 100.000 Dalton umfassen.

12. Verwendung nach Anspruch 11, wobei die Ausgangskomponenten wenigstens ein Präpolymer mit einem mittleren Molekulargewicht von weniger als 50.000 Dalton umfassen.

13. Verwendung nach Anspruch 11, wobei die Ausgangskomponenten wenigstens ein Präpolymer mit einem mittleren Molekulargewicht von weniger als 25.000 Dalton umfassen.

14. Verwendung nach einem der Ansprüche 9 bis 13, wobei wenigstens eine Ausgangskomponente ein Divinylpolydimethylsiloxan umfasst, wobei die Methylgruppen teilweise durch Arylgruppen ersetzt sein können.

15. Verwendung nach Anspruch 14, wobei die Methylgruppen teilweise durch Phenylgruppen ersetzt sein können.

16. Verwendung nach einem der Ansprüche 9 bis 15, wobei zur Einstellung der Vernetzungsdichte und der mechanischen Eigenschaften des gebildeten Gels Alkylgruppen teilweise durch Vinylgruppen ersetzt werden.

17. Verwendung nach einem der Ansprüche 9 bis 13, wobei wenigstens eine Komponente aus einem vernetzbaren Poly(di-)alkylsiloxan besteht, das eine oder mehrere Si-H-Funktionen enthält.

18. Verwendung nach Anspruch 17, wobei die Komponente Dimethylsiloxan mit einer oder mehrerer Si-H-Funktionen ist.

19. Verwendung nach Anspruch 17, wobei die Komponente Dihydrogenpoly(di)methylsiloxan ist.

20. Verwendung nach einem der Ansprüche 9 bis 17, wobei die Ausgangskomponenten eine Viskosität von 500 mPas, bestimmt mit einem Brookfield DV-II Viscometer, Spindel 42 bei 25°C, aufweisen.

21. Verwendung nach einem der Ansprüche 9 bis 20, wobei das vernetzte Polymer das Reaktionsprodukt zweier Ausgangskomponenten ist, die beide ein Divinylpolydimethylsiloxan mit einer Viskosität von 500 mPas und einem mittleren Molekulargewicht von 15.000 Dalton umfassen, und von denen die eine einen zusätzlichen Gehalt an einem Vernetzungsmittel, und die andere einen Gehalt an einem Vernetzungskatalysator aufweist.

22. Verwendung nach einem der Ansprüche 9 bis 20, wobei das vernetzte Polymer das Reaktionsprodukt zweier Ausgangskomponenten ist, von denen die eine ein Hydrogensiloxan mit einem zusätzlichen Gehalt an Verzögerungsmittel enthält, und die andere mehrfachfunktionelle vinylsubstituierte Polydialkylsiloxane sowie ggf. auch monofunktionelle vinylhaltige Monomere oder Polymere und den Katalysator enthält.

23. Verwendung nach einem der Ansprüche 21 oder 22, wobei das Vernetzungsmittel ein Si-H-Gruppen aufweisendes Polydimethylsiloxan ist.

24. Verwendung nach einem der Ansprüche 1 bis 23, wobei die Aderfüllmasse eine Konuspenetration, bestimmt mit einem SETA-Penetrometer bei 21° C, 105 g, von ungefähr 20 bis 500 bei einer Dichte von 0,98 aufweist.

25. Verwendung nach einem der Ansprüche 1 bis 24, wobei die Aderfüllmasse einen Gehalt an Füllstoff zur Minderung der thermischen Ausdehnung der Aderfüllmasse aufweist.

26. Verwendung nach Anspruch 25, wobei der Füllstoff in Form von Nanopartikeln ist.

27. Verwendung nach einem der Ansprüche 1 bis 26 zum Einsatz unter Bedingungen erhöhter Temperatur und insbesondere bei vertikaler Anordnung des Kabels.

28. Verfahren zur Herstellung eines mit einer Aderfüllmasse ausgestatteten optischen Kabels, bei dem man wenigstens zwei ausreichend fließfähige Ausgangskomponenten bereitstellt, die Newton'sches Fließverhalten zeigen und von denen wenigstens eine Ausgangskomponente Divinylpoly(di-)alkylsiloxan ist, wobei die Alkylgruppen teilweise durch Arylgruppen ersetzt sein können, und wobei alle Ausgangskomponenten reaktive Monomere oder Präpolymere mit einer Viskosität von weniger als 1.000 mPas, bestimmt mit einem Brookfield DV-II Viscometer, Spindel 42 bei 25°C, umfassen, und die miteinander zur Ausbildung eines vernetzten Polymers umgesetzt werden können; aus den Ausgangskomponenten vor, während oder nach deren Zusammenführen mit den Kabelbestandteilen des optischen Kabels ein Reaktionsgemisch herstellt; und das Reaktionsgemisch *in situ* katalytisch zur Bildung der Kabelfüllmassen umsetzt, wobei der bei der katalysierten Reaktion verwendete Katalysator ein Katalysator auf Basis von Platin oder eine Verbindung des Iridiums, Rhodiums oder Palladiums ist.

29. Verfahren nach Anspruch 28, wobei die Alkylgruppen teilweise durch Phenylgruppe ersetzt sein können.

30. Verfahren nach Anspruch 28 oder 29, bei dem die Ausgangskomponenten durch Dosierpumpen zu einer Mischstation geführt und vor dem Einbringen in einen, die Leiter bereits enthaltenden Kabelmantel zu einem zum Einbringen ausreichend flüssigen Reaktionsgemisch verarbeitet werden.

31. Verfahren nach einem der Ansprüche 28 bis 30, bei dem das Reaktionsgernisch zu einem Gel umgesetzt wird.

32. Verfahren nach Anspruch 31, wobei das Gel elastisch ist.

33. Verfahren nach einem der Ansprüche 28 bis 32, mit einer Liniengeschwindigkeit von wenigstens 300 m/min bei der Fertigung des Kabels.

34. Verfahren nach Anspruch 33, wobei die Liniengeschwindigkeit 400 m/min ist.

35. Verwendung nach einem der Ansprüche 1 bis 27 zur Fixierung der Leiter in einem optischen Kabel und Verminderung der mechanischen Spannungsbelastung der Leiter.

36. Verwendung nach Anspruch 35 bei vertikaler Montage.

## Claims

1. Use of at least one polymer formed in situ by crosslinking as a core filling compound for optical cables, the polymer being formed by a catalysed reaction of a sufficiently free-flowing mixture of at least two starting components in the course of production of the cores, the starting components comprising reactive monomers or prepolymers, at least one starting component being divinylpoly(di)alkylsiloxane where the alkyl groups may be partly replaced by aryl groups, and all starting components having newtonian flow characteristics and a viscosity of less than 1000 mPas, determined with a Brookfield DV-II viscometer, spindle 42 at 25°C, and the catalyst used in the catalysed reaction being a catalyst based on platinum or a compound of iridium, rhodium or palladium.

2. Use according to Claim 1, wherein the alkyl groups may be partly replaced by phenyl groups.

3. Use according to Claim 1 or 2, wherein the polymer is formed in the interior of a hollow core made of steel or thermoplastic polymers such that it embeds the conductors.

4. Use according to Claim 3, wherein the conductors are light guide fibres.

5. Use according to any of Claims 1 to 4, wherein the compound is a gel.

6. Use according to Claim 5, wherein the gel is elastic.

7. Use according to any of Claims 1 to 6, wherein the crosslinked polymer is thermally stable up to at least 200°C.

8. Use according to Claim 7, wherein the crosslinked polymer is thermally stable up to at least 230°C.

9. Use according to any of Claims 1 to 8, wherein the starting components comprise prepolymers.

10. Use according to any of Claims 1 to 9, wherein at least one starting component comprises a monofunctional monomer or prepolymer in order to lower the crosslinking density of the gel.

11. Use according to either of Claims 9 and 10, wherein the starting components comprise at least one prepolymer having a mean molecular weight of less than 100 000 daltons.

12. Use according to Claim 11, wherein the starting components comprise at least one prepolymer having a mean molecular weight of less than 50 000 daltons.

13. Use according to Claim 11, wherein the starting components comprise at least one prepolymer having a mean molecular weight of less than 25 000 daltons.

14. Use according to any of Claims 9 to 13, wherein at least one starting component comprises a divinylpolydimethylsiloxane where the methyl groups may be partly replaced by aryl groups.

15. Use according to Claim 14, wherein the methyl groups may be partly replaced by phenyl groups.

16. Use according to any of Claims 9 to 15, wherein the crosslinking density and the mechanical properties of the gel formed are adjusted by partly replacing alkyl groups by vinyl groups.

17. Use according to any of Claims 9 to 13, wherein at least one component consists of a crosslinkable poly(di)alkylsiloxane containing one or more Si-H functions.

18. Use according to Claim 17, wherein the component is dimethylsiloxane having one or more Si-H functions.

19. Use according to Claim 17, wherein the component is dihydropoly(di)methylsiloxane.

20. Use according to any of Claims 9 to 17, wherein the starting components have a viscosity of 500 mPas, determined with a Brookfield DV-II viscometer, spindle 42 at 25°C.

21. Use according to any of Claims 9 to 20, wherein the crosslinked polymer is the reaction product of two starting components, both of which comprise a divinylpolydimethylsiloxane having a viscosity of 500 mPas and a mean molecular weight of 15 000 daltons, and one of which has an additional content of a crosslinking agent and the other has a content of a crosslinking catalyst.

22. Use according to any of Claims 9 to 20, wherein the crosslinked polymer is the reaction product of two starting components, one of which comprises a hydrosiloxane having an additional content of retarding agent, and the other comprises polyfunctional vinyl-substituted polydialkylsiloxanes and optionally also monofunctional vinylic monomers or polymers and the catalyst.

23. Use according to either of Claims 21 and 22, wherein the crosslinking agent is a polydimethyl siloxane having Si-H groups.

24. Use according to any of Claims 1 to 23, wherein the core filling compound has a cone penetration, determined with an SETA penetrometer at 21°C, 105 g, of about 20 to 500 at a density of 0.98.

25. Use according to any of Claims 1 to 24, wherein the core filling compound has a content of filler to reduce the thermal expansion of the core filling compound.

26. Use according to Claim 25, wherein the filler is in the form of nanoparticles.

27. Use according to any of Claims 1 to 26 for employment under conditions of elevated temperature and especially with vertical arrangement of the cable.

28. Process for producing an optical cable equipped with a core filling compound, in which at least two sufficiently free-flowing starting components exhibiting Newtonian flow characteristics are provided, at least one starting component being divinylpoly(di)alkylsiloxane where the alkyl groups may be partly replaced by aryl groups, and all starting components comprising reactive monomers or prepolymers having a viscosity of less than 1000 mPas, determined with a Brookfield DV-II viscometer, spindle 42 at 25°C, and being reactable with one another to form a crosslinked polymer; the starting components, before, during or after the combination thereof with the cable constituents of the optical cable, are used to produce a reaction mixture; and the reaction mixture is converted catalytically in situ to form the cable filling compound, the catalyst used in the catalysed reaction being a catalyst based on platinum or a compound of iridium, rhodium or palladium.

29. Process according to Claim 28, wherein the alkyl groups may be partly replaced by phenyl groups.

30. Process according to Claim 28 or 29, in which the starting components are conducted to a mixing station by metering pumps and, prior to introduction into a cable sheath already containing the conductors, are processed to give a reaction mixture of sufficient fluidity for introduction.

31. Process according to any of Claims 28 to 30, in which the reaction mixture is converted to a gel.

32. Process according to Claim 31, wherein the gel is elastic.

33. Process according to any of Claims 28 to 32, with a linear speed of at least 300 m/min in the manufacture of the cable.

34. Process according to Claim 33, wherein the linear speed is 400 m/min.

35. Use according to any of Claims 1 to 27 for fixing the conductors in an optical cable and reducing mechanical stress on the conductors.

36. Use according to Claim 35 in the case of vertical mounting.

## Revendications

1. Utilisation d'au moins un polymère formé in situ par réticulation comme masse de remplissage de brins pour câbles optiques, le polymère étant formé par une réaction catalysée d'un mélange suffisamment apte à l'écoulement d'au moins deux composants de départ au cours de la fabrication des brins, les composants de départ comprenant des monomères ou prépolymères réactifs, au moins un composant de départ étant du divinylpoly(di-)alkylsiloxane, les groupes alkyle pouvant être remplacés partiellement par des groupes aryle et tous les composants de départ présentant un comportement d'écoulement de Newton et une viscosité inférieure à 1000 mPa.s, déterminée à l'aide d'un viscosimètre de Brookfield DV-II, mobile 42 à 25°C, et le catalyseur utilisé lors de la réaction catalysée étant un catalyseur à base de platine ou un composé de l'iridium, du rhodium ou du palladium.

2. Utilisation selon la revendication 1, les groupes alkyle pouvant être remplacés partiellement par des groupes phényle.

3. Utilisation selon la revendication 1 ou 2, le polymère étant formé à l'intérieur d'un brin creux en acier ou en polymère thermoplastique de manière telle qu'il enrobe les conducteurs.

4. Utilisation selon la revendication 3, les conducteurs étant des fibres optiques.

5. Utilisation selon l'une quelconque des revendications 1 à 4, la masse étant un gel.

6. Utilisation selon la revendication 5, le gel étant élastique.

7. Utilisation selon l'une quelconque des revendications 1 à 6, le polymère réticulé étant thermiquement stable, au moins jusqu'à 200°C.

8. Utilisation selon la revendication 7, le polymère réticulé étant thermiquement stable, au moins jusqu'à 230°C.

9. Utilisation selon l'une quelconque des revendications 1 à 8, les composants de départ comprenant des prépolymères.

10. Utilisation selon l'une quelconque des revendications 1 à 9, au moins un composant de départ comprenant un monomère ou un prépolymère monofonctionnel, afin de diminuer la densité de réticulation du gel.

11. Utilisation selon l'une quelconque des revendications 9 ou 10, les composants de départ comprenant au moins un prépolymère présentant un poids moléculaire moyen inférieur à 100 000 Daltons.

12. Utilisation selon la revendication Il, les composants de départ comprenant au moins un prépolymère présentant un poids moléculaire moyen inférieur à 50 000 Daltons.

13. Utilisation selon la revendication 11, les composants de départ comprenant au moins un prépolymère présentant un poids moléculaire moyen inférieur à 25 000 Daltons.

14. Utilisation selon l'une quelconque des revendications 9 à 13, au moins un composant de départ comprenant un divinylpolydiméthylsiloxane, les groupes méthyle pouvant être remplacés partiellement par des groupes aryle.

15. Utilisation selon la revendication 14, les groupes méthyle pouvant être remplacés partiellement par des groupes phényle.

16. Utilisation selon l'une quelconque des revendications 9 à 15, les groupes alkyle étant remplacés partiellement par des groupes vinyle pour le réglage de la densité de réticulation et des propriétés mécaniques du gel formé.

17. Utilisation selon l'une quelconque des revendications 9 à 13, au moins un composant étant constitué par un poly(di-)alkylsiloxane réticulable, qui contient une ou plusieurs fonctions Si-H.

18. Utilisation selon la revendication 17, le composant étant le diméthylsiloxane comprenant une ou plusieurs fonctions Si-H.

19. Utilisation selon la revendication 17, le composant étant du dihydrogénopoly(di)méthylsiloxane.

20. Utilisation selon l'une quelconque des revendications 9 à 17, les composants de départ présentant une viscosité de 500 mPa.s, déterminée à l'aide d'un viscosimètre Brookfield DV-II, mobile 42 à 25°C.

21. Utilisation selon l'une quelconque des revendications 9 à 20, le polymère réticulé étant le produit de réaction de deux composants de départ, qui comprennent tous les deux un divinylpolydiméthylsiloxane présentant une viscosité de 500 mPa.s et un poids moléculaire moyen de 15 000 Daltons et dont un présente une teneur supplémentaire en un agent de réticulation et l'autre une teneur en un catalyseur de réticulation.

22. Utilisation selon l'une quelconque des revendications 9 à 20, le polymère réticulé étant le produit de réaction de deux composants de départ, dont l'un contient un hydrogénosiloxane présentant une teneur supplémentaire en retardateur et l'autre des polydialkylsiloxanes polyfonctionnels substitués par vinyle ainsi que le cas échéant également des monomères ou des polymères monofonctionnels contenant vinyle et le catalyseur.

23. Utilisation selon l'une quelconque des revendications 21 ou 22, le réticulant étant un polydiméthylsiloxane présentant des groupes Si-H.

24. Utilisation selon l'une quelconque des revendications 1 à 23, la masse de remplissage des brins présentant une pénétrabilité au cône, déterminée par un pénétromètre SETA à 21°C, 105 g, d'environ 20 à 500 à une densité de 0,98.

25. Utilisation selon l'une quelconque des revendications 1 à 24, la masse de remplissage des brins présentant une teneur en charge destinée à diminuer la dilatation thermique de la masse de remplissage des brins.

26. Utilisation selon la revendication 25, la charge étant sous forme de nanoparticules.

27. Utilisation selon l'une quelconque des revendications 1 à 26 destinée à une utilisation dans des conditions d'une température augmentée et en particulier dans le cas d'une disposition verticale du câble.

28. Procédé de fabrication d'un câble optique pourvu d'une masse de remplissage des brins, dans lequel on prépare au moins deux composants de départ suffisamment aptes à l'écoulement, qui présentent un comportement d'écoulement de Newton et dont au moins un composant de départ est du divinylpoly(di-)alkylsiloxane, les groupes alkyle pouvant être remplacés partiellement par des groupes aryle, et tous les composants de départ comprenant des monomères ou des prépolymères réactifs présentant une viscosité inférieure à 1000 mPa.s, déterminée à l'aide d'un viscosimètre de Brookfield DV-II, mobile 42 à 25°C, et qui peuvent être transformés les uns avec les autres pour former un polymère réticulé ; on prépare un mélange réactionnel à partir des composants de départ, avant, pendant ou après leur réunion avec les constituants du câble optique ; et on transforme le mélange réactionnel catalytiquement in situ pour former la masse de remplissage de câbles, le catalyseur utilisé lors de la réaction catalysée étant un catalyseur à base de platine ou un composé de l'iridium, du rhodium ou du palladium.

29. Procédé selon la revendication 28, les groupes alkyle pouvant être remplacés partiellement par des groupes phényle.

30. Procédé selon la revendication 28 ou 29, dans lequel les composants de départ sont guidés via des pompes de dosage vers un poste de mélange et sont transformés, avant l'introduction dans une gaine de câble contenant déjà les conducteurs, en un mélange réactionnel suffisamment liquide pour son introduction.

31. Procédé selon l'une quelconque des revendications 28 à 30, dans lequel le mélange réactionnel est transformé en un gel.

32. Procédé selon la revendication 31, le gel étant élastique.

33. Procédé selon l'une quelconque des revendications 28 à 32, présentant une vitesse linéaire d'au moins 300 m/min lors de la fabrication du câble.

34. Procédé selon la revendication 33, la vitesse linéaire étant de 400 m/min.

35. Utilisation selon l'une quelconque des revendications 1 à 27 pour la fixation des conducteurs dans un câble optique et pour la diminution de la charge de tension mécanique des conducteurs.

36. Utilisation selon la revendication 35 lors d'un montage vertical.
